Europäisches Patentamt

European Patent Office

Office européen des brevets

(11) Veröffentlichungsnummer: **0 366 915**
**A1**

(19)

(12) **EUROPÄISCHE PATENTANMELDUNG**

(21) Anmeldenummer: **89117017.7**

(22) Anmeldetag: **14.09.89**

(51) Int. Cl.⁵: **B60C 1/00 , C08L 9/00**

(30) Priorität: **31.10.88 DE 3837047**

(43) Veröffentlichungstag der Anmeldung:
**09.05.90 Patentblatt 90/19**

(84) Benannte Vertragsstaaten:
**AT BE CH DE ES FR GB GR IT LI LU NL SE**

(71) Anmelder: **Continental AG**
**Königsworther Platz 1 Postfach 1 69**
**D-3000 Hannover 1(DE)**

(72) Erfinder: **Stevens, Hendrik, Dr.**
**Westermannweg 31A**
**D-3000 Hannover 21(DE)**
Erfinder: **Kaiser, Günter, Dr.**
**Schieferkamp 23**
**D-3000 Hannover 91(DE)**

(54) **Laufstreifenkautschukmischung für Fahrzeugluftreifen.**

(57) Die Erfindung bezieht sich auf eine Laufstreifenkautschukmischung für Fahrzeugluftreifen. Um mehrere Reifeneigenschaften gezielt einstellen zu können, wird vorgeschlagen, daß die Kautschukkomponente aus einem reinen Styrol-Acrylnitril-Butadien-Terpolymer oder einem Verschnitt dieses Terpolymers mit einem oder mehreren anderen an sich bekannten Dienpolymeren aufgebaut ist, daß, jeweils bezogen auf 100 Gew.-% Terpolymer, das Terpolymer einen Butadiengehalt von 40 bis 80 Gew.-% aufweist, daß der Styrolgehalt zwischen 10 und 40 Gew.-% und der Acrylnitrilgehalt zwischen 10 und 50 Gew.-% liegt, daß der Styrolgehalt und der Acrylnitrilgehalt zusammen einen Wert zwischen 60 und 20 Gew.-% aufweisen und daß das Terpolymer eine Glasübergangstemperatur im Bereich von 60°C bis 0°C hat.

EP 0 366 915 A1

## Laufstreifenkautschukmischung für Fahrzeugluftreifen

Die Erfindung betrifft eine Laufstreifenkautschukmischung für Fahrzeugluftreifen unter Verwendung üblicher Füllstoffe, Weichmacher, Vulkanisationsmittel, Vulkanisationsregler und Alterungsschutzmittel.

Bei bekannten Laufstreifenkautschukmischungen werden Emulsions- und Lösungspolymere, z.B. SBR und hochvinylhaltiger Butadienkautschuk eingesetzt, bei denen die Glasübergangstemperatur ($T_G$) zur Optimierung des Rutsch- und Rollwiderstandes gezielt eingestellt werden. Mit den bekannten Laufflächenmischungen ist es regelmäßig nicht möglich, weitere Eigenschaften zu verbessern, z.B. den Abriebwiderstand und die Fahreigenschaften (Lenkverhalten) des Reifens.

Der Erfindung liegt deshalb die Aufgabe zugrunde, eine Laufflächenmischung mit einstellbaren Glasübergangstemperaturen und Polaritäten zur gezielten Einstellung von Reifeneigenschaften, z.B. Rutsch- und Rollwiderstand, Abriebwiderstand und Fahreigenschaften (Lenkverhalten) anzugeben.

Diese Aufgabe wird erfindungsgemäß dadurch gelöst, daß die Kautschukkomponente aus einem reinen Styrol-Acrylnitril-Butadien-Terpolymer oder einem Verschnitt dieses Terpolymers mit einem oder mehreren anderen an sich bekannten Dienpolymeren aufgebaut ist, daß, jeweils bezogen auf 100 Gew.-% Terpolymer, das Terpolymer einen Butadiengehalt von 40 bis 80 Gew.-% aufweist, daß der Styrolgehalt zwischen 10 und 40 Gew.-% und der Acrylnitrilgehalt zwischen 10 und 50 Gew.-% liegt, daß der Styrolgehalt und der Acrylnitrilgehalt zusammen einen Wert zwischen 60 und 20 Gew.-% aufweisen und daß das Terpolymer eine Glasübergangstemperatur im Bereich von -60°C bis 0°C hat.

Die Erfindung bietet den Vorteil, daß durch die geeignete Wahl des Butadiengehalts als Basiskautschuk im Terpolymer sowie durch die Auswahl des Styrolgehalts und des Acrylnitrilgehalts als Comonomere des Terpolymers die Glasübergangstemperatur in einem weiten Bereich von -60°C bis 0°C einstellbar ist und ein optimaler Kompromiß zwischen den genannten Reifeneigenschaften erhalten wird.

Die Kautschukkomponente der erfindungsgemäßen Laufstreifenmischung kann entweder aus einem reinen Styrol-Acrylnitril-Butadien-Terpolymer oder einem Verschnitt dieses Terpolymers mit einem oder mehreren anderen üblichen Dienpolymeren wie Polyisopren, Styrolbutadienkautschuk oder Butadienkautschuk bestehen. Dabei sollte der Butadiengehalt des Terpolymers zwischen 40 und 80 Gew.-%, bevorzugt zwischen 50 und 65 Gew.-% liegen, bezogen auf 100 Gew.-% des Terpolymers. Der Styrolgehalt kann zwischen 10 und 40 Gew.-% und der Acrylnitrilgehalt zwischen 10 und 50 Gew.-% liegen, wobei der Styrolgehalt und der Acrylnitrilgehalt zusammen einen Wert zwischen 60 und 20 Gew.-% aufweisen. Die Glasübergangstemperatur des Terpolymers liegt zwischen -60°C und 0°C.

Für den Fall, daß die Laufstreifenmischung als Kautschukkomponente ausschließlich Styrol-Acrylnitril-Butadien-Terpolymer enthält, kommen als Füllstoffbeigaben 40 bis 90 Gew.-Teile Ruß und weiterhin 0 bis 60 Gew.-Teile Weichmacher in Frage, jeweils bezogen auf 100 Gew.-Teile Terpolymer, wobei der Ruß im Teilchengrößenbereich entsprechend JAZ (Jodadsorptionszahl) 80 bis 160 mg Jod/g liegt und eine Struktur entsprechend einer DBP-Zahl von 65 bis 160 ml/100g aufweist. Als Weichmacher kommt bevorzugt aromatisches Mineralöl in Frage.

Für den Fall, daß als Kautschukkomponente in der Mischung ein Verschnitt aus Terpolymer und einem oder mehreren Dienkautschuken vorliegt, kommen je nach den gewünschten Eigenschaften für die Reifenlauffläche Terpolymeranteile zwischen 10 und 90 Gew.-%, bezogen auf 100 Gew.-% Kautschuk, in Frage. Als Füllstoff und Weichmacheranteile eignen sich Mengen, wie sie vorstehend beim Beispiel des reinen Terpolymers als Kautschukkomponente aufgeführt sind.

Die Mooneyviskosität des Termpolymers sollte bei allen Laufstreifenmischungen bei 100°C zwischen 30 und 110 ME liegen.

Nachfolgend werden zwei Modellrezepturen beschrieben, von denen die erste als Kautschukkomponente 100 K% Terpolymer enthält, während die zweite einen Verschnitt aus 70 K% Terpolymer und 30 K% SBR 1500 aufweist. In Tabelle 1 sind die verschiedenen Eigenschaften unterschiedlicher Mischungen aufgeführt, wobei in der ersten Spalte eine Vergleichsmischung aus dem Stand der Technik genannt ist, in den Spalten I bis V sich Mischungen mit 100 K% Terpolymer unterschiedlicher Zusammensetzung befinden und in Spalte VI die Verschnittmischung angeführt ist.

| 1. Rezeptur | |
|---|---|
| Terpolymer | 100,0 K% |
| Ruß N 339 | 45,0 K% |
| Zinkoxid | 4,0 K% |
| Stearinsäure | 2,0 K% |
| Alterungsschutzmittel | 1,3 K% |
| Schwefel | 2,0 K% |
| Beschleuniger CBS | 1,1 K% |
| Beschleuniger DPG | 0,4 K% |

| 2. Rezeptur | |
|---|---|
| Terpolymer | 70 K% |
| SBR 1500 | 30 K% |
| Ruß N 339 | 45 K% |
| Stearinsäure | 2 K% |
| Zinkoxid | 4 K% |
| ASM Santoflex 13 | 1,3 K% |
| Schwefel | 2,0 K% |
| Beschleuniger CBS | 1,1 K% |
| Beschleuniger DPG | 0,4 K% |

Tabelle 1

| Beispiele SBR-ACN-Terpolymer | | | | | | | |
|---|---|---|---|---|---|---|---|
| Vergleich | Stand d.Technik | I | II | III | IV | V | VI |
| Styrol % | 23,5 | 24,1 | 15,9 | 24,4 | 14,9 | 24 | 24 |
| BR % | 76,5 | 54,6 | 53 | 44,1 | 72,8 | 45 | 45 70 % |
| ACN % | - | 21,3 | 31,1 | 31,5 | 12,3 | 31 | 31 SBR 1500 30% |
| Festigkeit N/mm² | 27,4 | 23,1 | 27,1 | 23,2 | 26,4 | 27,6 | 19,5 |
| Reißdehnung % | 440 | 285 | 375 | 285 | 460 | 285 | 395 |
| Spannungswert 300% N/mm² | 17,4 | - | 21,5 | - | 16,2 | - | 16,2 |
| ShA | 67 | 78 | 76 | 90 | 69 | 90 | 71 |
| * Abrieb-Index | 100 | 81 | 95 | 75 | 98 | 86 | 95 |
| * RUWI-Index | 100 | 127 | 130 | 133 | 113 | 130 | 120 |
| * ROWI-Index | 100 | 93 | 90 | 85 | 95 | 110 | 100 |
| Stoßelastizität % | 58 | 24 | 22 | 20 | 50 | 21 | 29 |

* Werte größer als 100 bedeutet besser

**Ansprüche**

1. Laufstreifenkautschukmischung für Fahrzeugluftreifen unter Verwendung üblicher Füllstoffe, Weichmacher, Vulkanisationsmittel, Vulkanisationsregler und Alterungsschutzmittel, **dadurch gekennzeichnet,** daß die Kautschukkomponente aus einem reinen Styrol-Acrylnitril-Butadien-Terpolymer oder einem Verschnitt dieses Terpolymers mit einem oder mehreren anderen an sich bekannten Dienpolymeren aufgebaut ist, daß, jeweils bezogen auf 100 Gew.-% Terpolymer, das Terpolymer einen Butadiengehalt von 40 bis 80 Gew.-% aufweist, daß der Styrolgehalt zwischen 10 und 40 Gew.-% und der Acrylnitrilgehalt zwischen 10 und 50 Gew.-% liegt, daß der Styrolgehalt und der Acrylnitrilgehalt zusammen einen Wert zwischen 60 und 20 Gew.-% aufweisen und daß das Terpolymer eine Glasübergangstemperatur im Bereich von -60°C bis 0°C hat.

2. Mischung nach Anspruch 1, dadurch gekennzeichnet, daß sie als Kautschukkomponente ausschließlich Styrol-Acrylnitril-Butadien-Terpolymer enthält, daß sie als Füllstoff 40 bis 90 Gew.-Teile Ruß und weiterhin 0 bis 60 Gew.-Teile Weichmacher enthält, jeweils bezogen auf 100 Gew.-T. Kautschuk, und daß der Ruß im Teilchengrößenbereich entsprechend JAZ (Jodadsorptionszahl) 80 bis 160 mg Jod/g liegt und eine Struktur entsprechend einer DBP-Zahl von 65 bis 160 ml/100g aufweist.

3. Mischung nach Anspruch 1, dadurch gekennzeichnet, daß der Anteil des Terpolymers an der gesamten Kautschukkomponente zwischen 10 und 90 Gew.-% liegt.

4. Mischung nach Anspruch 1, dadurch gekennzeichnet, daß die Mooneyviskosität des Terpolymers bei 100°C zwischen 30 und 110 ME liegt.

**Europäisches Patentamt**

# EUROPÄISCHER RECHERCHENBERICHT

Nummer der Anmeldung

EP 89 11 7017

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DATABASE WPI, Nr. 74-40537V(22), Derwent Publications Ltd, London, GB; & JP-A-48 38 336 (BRIDGESTONE TIRE CO LTD) 06-06-1973 * Zusammenfassung * --- | - | B 60 C 1/00 C 08 L 9/00 |
| A | DE-A-1 570 113 (GOODYEAR) * Anspruch 1 * ----- | | |

| | | | RECHERCHIERTE SACHGEBIETE (Int. Cl.5) |
|---|---|---|---|
| | | | B 60 C C 08 L |

Der vorliegende Recherchenbericht wurde für alle Patentansprüche erstellt

| Recherchenort | Abschlußdatum der Recherche | Prüfer |
|---|---|---|
| DEN HAAG | 30-01-1990 | VAN HUMBEECK F.W.C. |